# FASCICULE DE BREVET EUROPEEN

(11) **EP 1 044 850 B1**
(45) Date de publication et mention de la délivrance du brevet: **11.06.2003**
(21) Numéro de dépôt: 00400978.3
(22) Date de dépôt: 10.04.2000
(51) Int. Cl.: B60R 13/02

(54) **Agencement pour l'habillage d'une pièce de tôle d'un véhicule automobile**
Verkleidungsanordnung für einen Kraftfahrzeugblechteil
Trim panel arrangement for a metal part of a motor vehicle

(30) Priorité: 16.04.1999 FR 9904834
(43) Date de publication de la demande: 18.10.2000
(73) Titulaire: Renault s.a.s., 92100 Boulogne Billancourt (FR)
(72) Inventeur: Ponceau, Philippe, 78610 Le Perray en Yvelines (FR)

(56) Documents cités:
- EP-A- 0 339 238
- EP-A- 0 829 393
- DE-A- 3 248 705
- DE-A- 4 230 636
- DE-C- 4 305 597
- DE-C- 19 636 505

## Description

La présente invention concerne un agencement pour l'habillage d'une pièce en tôle d'un véhicule automobile.

L'invention concerne plus particulièrement un agencement pour l'habillage intérieur d'un élément de structure de la caisse du véhicule tel que par exemple une partie d'encadrement délimitant une ouverture latérale de la caisse du véhicule permettant d'y accéder.

Un tel élément d'encadrement se présente par exemple sous la forme d'une pièce en tôle assemblée à partir de plusieurs composants et présentant une forme générale de caisson creux conformé selon un contour ou profil correspondant à celui de l'ouverture.

Par exemple, en partie inférieure, l'élément d'encadrement est sensiblement horizontal et longitudinal dans le cas d'une ouverture fermée par une porte latérale, et il est délimité par un panneau de tôle sensiblement vertical et par un panneau de tôle sensiblement horizontal.

Afin d'améliorer l'esthétique et le confort du véhicule, il est souhaitable d'habiller quasi entièrement les parties de tôle de la caisse du véhicule apparentes à l'intérieur de l'habitacle, et notamment par exemple cette partie inférieure d'encadrement de porte.

À cet effet, il est connu de rapporter sur les différentes parties de l'encadrement, et par exemple sur sa partie inférieure, un élément d'habillage réalisé par moulage en matériau synthétique, notamment en matière plastique, qui présente une forme générale complémentaire de celle de la pièce de tôle qu'il habille.

Ainsi, on connaît du document EP-A-0 829 393 un agencement pour l'habillage d'une pièce en tôle d'un véhicule automobile du type comportant un élément d'habillage, réalisé par moulage, allongé en forme générale de plaque à deux pans qui, en position montée de l'élément d'habillage sur la pièce en tôle, s'étendent dans des plans sensiblement perpendiculaires, respectivement horizontal et vertical, parallèlement à des parties en regard de la pièce en tôle, et du type comportant des moyens de fixation de l'élément d'habillage sur la pièce en tôle qui sont fixés sur cette dernière et dans lesquels l'élément d'habillage est emboîté selon une direction transversale globalement perpendiculaire à la direction longitudinale générale de l'élément d'habillage, ces moyens de fixation comportant des premiers moyens de fixation du pan vertical.

La fabrication par moulage d'un tel élément d'habillage comportant deux parties principales ou pans qui s'étendent dans des plans sensiblement perpendiculaires, et dont la face interne comporte des moyens de fixation ou d'accrochage réalisés venus de matière par moulage avec l'élément d'habillage nécessite un moule complexe. En effet, pour pouvoir démouler ce type de pièce qui comporte des parties en contre-dépouille, il est nécessaire que le moule comporte des tiroirs permettant l'éjection de la pièce moulée hors du moule.

Afin de remédier à ces difficultés, l'invention propose un agencement du type mentionné précédemment, caractérisé en ce que les deux pans de l'élément d'habillage sont reliés entre eux par une charnière longitudinale, et en ce que les moyens de fixation comportent des deuxièmes moyens de fixation du pan horizontal.

Grâce à la conception selon l'invention, il est possible de mouler l'élément d'habillage "à plat", c'est-à-dire avec ses deux pans principaux qui s'étendent sensiblement dans un même plan, la conformation finale de l'élément d'habillage avec une forme complémentaire de celle de la pièce qu'il habille étant obtenue lors du montage et de la fixation de l'élément d'habillage en place sur le véhicule.

Selon d'autres caractéristiques de l'invention :
- la charnière est une portion de l'élément d'habillage réalisée venue de matière par moulage avec les deux pans horizontal et vertical ;
- les moyens de fixation comportent au moins une agrafe fixée sur la pièce en tôle et comportant au moins une pince élastique comportant des moyens anti-retour pour serrer et retenir une nervure longitudinale formée sur la face interne de l'un des pans de l'élément d'habillage ;
- les moyens de fixation comportent au moins deux agrafes associées par paires fixées sur la pièce en tôle qui sont décalées latéralement l'une par rapport à l'autre et comportant chacune au moins une pince élastique comportant des moyens anti-retour pour serrer et retenir une nervure longitudinale formée sur la face interne de l'un en vis-à-vis des pans de l'élément d'habillage ;
- les deux agrafes associées par paires sont réalisées en une seule pièce ;
- les deux pinces élastiques s'étendent dans des plans sensiblement perpendiculaires ;
- la nervure s'étend depuis la face interne d'un pan de l'élément d'habillage et dans un plan transversal sensiblement perpendiculaire au pan ;
- la pièce en tôle comporte au moins une bande de tôle dont un bord longitudinal libre est équipé d'un joint, et en ce que, en position montée de l'élément d'habillage, une portion longitudinale d'un pan de l'élément d'habillage recouvre le joint au droit dudit bord.

D'autres caractéristiques et avantages de l'invention apparaîtront à la lecture de la description détaillée qui va suivre pour la compréhension de laquelle on se reportera aux dessins annexés dans lesquels :
- la figure 1 est une vue schématique en perspective qui illustre un élément d'habillage pour un agencement selon invention qui est représenté en position à proximité de la pièce qu'il habille en vue de son montage est de sa fixation sur cette pièce ;
- la figure 2 est une vue de détail, en section par un plan transversal, qui représente l'élément d'habillage partiellement monté et fixé ;
- la figure 3 est une vue similaire à celle de la figure 2 sur laquelle l'élément d'habillage est représenté monté et fixé.

Dans la description qui va suivre, afin de faciliter la compréhension de la description et des revendications, on utilisera à titre non limitatif les termes horizontal, vertical, supérieur, inférieur, avant, arrière, etc.

On a représenté sur les figures un élément d'habillage 10 destiné à recouvrir une pièce en tôle 12 appartenant à la structure de caisse d'un véhicule automobile.

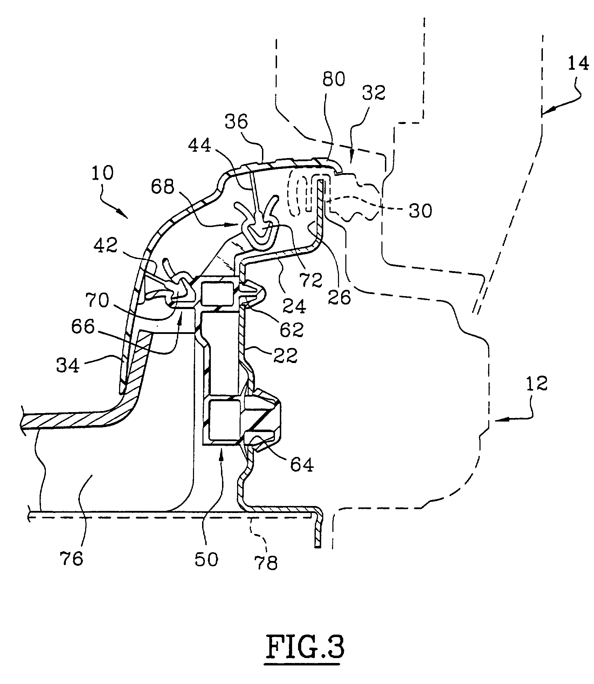

La pièce de 12 est ici un caisson longitudinal inférieur qui délimite la partie inférieure de l'encadrement de l'ouverture d'une porte latérale 14 (voir figure 3) du véhicule.

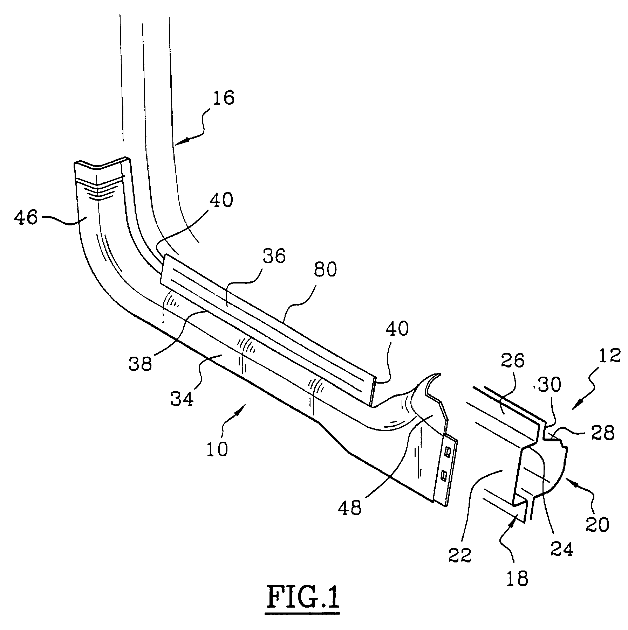

La pièce ou caisson en tôle 12 se prolonge généralement à ses deux extrémités longitudinales opposées par deux montants ou pieds verticaux dont l'un 16 est illustré schématiquement à la figure 1.

Le caisson 12 est ici constitué par un assemblage de deux pièces complémentaires 18 et 20 en tôle soudées entre elles.

La pièce intérieure 18 comporte notamment un panneau longitudinal et vertical 22 et un panneau longitudinal et horizontal étroit 24 qui se prolonge par une bande de tôle longitudinale et verticale 26.

De la même manière, la pièce extérieure 20 comporte un panneau longitudinal et horizontal étroit 28 qui se prolonge par une bande de tôle longitudinale et verticale 30 adjacente à la bande 26 de manière à permettre le soudage, par exemple par points, des deux bandes 26 et 30 pour la réalisation du caisson 12.

Selon un agencement connu, le bord longitudinal et horizontal supérieur libre commun aux deux bandes 26 et 30 est équipé d'un joint 32 de porte (voir figure 3) qui est monté à cheval sur les bandes adjacentes 26 et 30.

L'élément d'habillage 10 est un composant réalisé par moulage en matière plastique et qui est essentiellement constitué, dans sa partie principale d'orientation longitudinale, par un pan vertical 34 en forme générale de plaque et par un pan sensiblement horizontal 36 en forme de plaque qui, en position montée et fixée de l'élément d'habillage 10 et comme on peut le voir à la figure 3, s'étendent sensiblement parallèlement au panneau vertical 22 et au panneau horizontal 24 du caisson 12 respectivement, à distance transversale de ces panneaux.

Conformément aux enseignements de l'invention, les deux pans 34 et 36 appartenant à l'élément d'habillage 10 sont reliés entre eux par une zone longitudinale formant charnière ou pli d'articulation 38. Le pan 36 est délimité longitudinalement par deux bords transversaux d'extrémité 40.

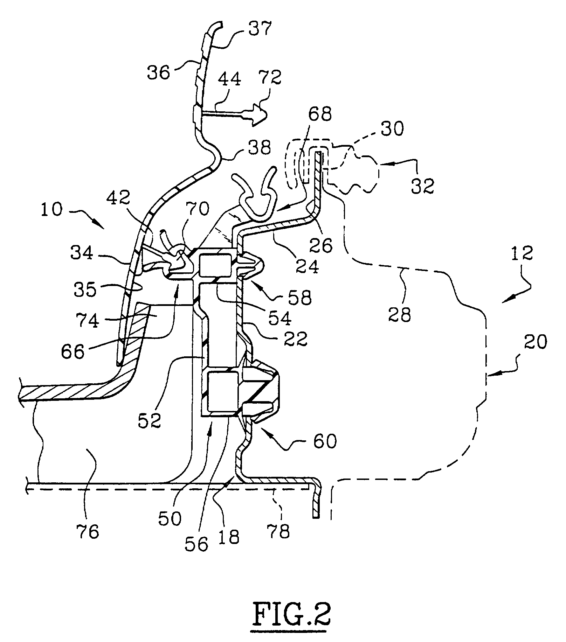

Ainsi, lors de l'opération de moulage, les deux parties principales en forme de pans longitudinaux 34 et 36 s'étendent dans des plans sensiblement parallèles, c'est-à-dire dans une position relative qui est celle illustrée aux figures 1 et 2.

La face interne 35, 37 de chaque pan 34, 36 comporte une nervure de montage et de fixation 42, 44 qui s'étend globalement dans un plan transversal perpendiculaire au plan du pan qui la porte.

Les nervures 42 et 44 sont réalisées venues de matière par moulage avec l'élément d'habillage 10 et elles peuvent s'étendre sur toute la longueur de sa partie principale d'orientation longitudinale ou être constituées par des tronçons longitudinaux de nervures répartis le long de l'élément d'habillage 10.

Comme on peut le voir à la figure 2, lors du moulage, l'orientation parallèle des deux pans 34 et 36 avec les nervures 42 et 44 qui sont elles aussi globalement parallèles entre elles, facilite la conception du moule (non représenté) et les opérations de moulage et de démoulage tout en offrant de plus grandes possibilités de conformage de l'élément d'habillage 10, notamment à ses extrémités longitudinales opposées qui peuvent comporter des coudes de raccordement 46 et 48 de formes plus ou moins complexes.

Pour la fixation ou accrochage de l'élément d'habillage 10 sur le caisson 12, il est ici prévu, à titre d'exemple, une série d'agrafes 50 qui sont réparties longitudinalement le long du caisson 12 sur le panneau vertical 22 et dont l'une est représentée en section transversale aux figures 2 et 3.

Chaque agrafe 50 est une pièce moulée en matière plastique constituée pour l'essentiel par un corps en forme de plaque verticale 52 qui s'étend parallèlement au panneau vertical 22.

La plaque 52, pour sa fixation sur le panneau 22, comporte deux blocs 54 et 56 formant entretoises et dont chacun se termine par une griffe 58, 60 reçue par emboîtement élastique dans un trou complémentaire 62, 64 du panneau 22.

Chaque agrafe 50 est une agrafe double, c'est-à-dire qu'elle comporte une première pince élastique 66 destinée à serrer et à retenir la première nervure 42 portée par la face interne 35 du pan 34, et une deuxième pince élastique 68 destinée à serrer et à retenir la deuxième nervure 44 portée par la face interne 37 du pan 36.

Afin de permettre l'emboîtement automatique de chaque nervure 42, 44 dans la pince élastique correspondante 66, 68 puis la retenue, selon la direction transversale, de chaque nervure dans sa pince élastique, le bord longitudinal d'extrémité libre de chaque nervure 42, 44 est conformé, en section transversale, en une pointe de flèche 70, 72.

Grâce à l'agencement selon invention, le montage de l'élément d'habillage 10 et son accrochage sur la pièce en tôle 12 s'effectue en deux temps.

À l'issue d'une première étape, et comme on peut le voir à la figure 2, élément d'habillage 10 est mis en place et fixé dans les premières pinces élastiques 66 des agrafes 50 selon un mouvement sensiblement horizontal de l'intérieur vers l'extérieur du véhicule.

Le pan vertical 34 occupe alors sa position quasi définitive dans laquelle il est sensiblement parallèle au panneau vertical 22, à distance transversale de ce dernier, en recouvrant la partie supérieure 74 d'un tapis 76 qui recouvre une tôle de plancher 78.

Lors d'une deuxième étape, on fixe par accrochage l'autre pan 36 en le faisant basculer autour de la charnière 38, dans le sens horaire en considérant la figure 2, pour l'amener dans sa position définitive de montage illustrée à la figure 3 dans laquelle sa nervure 44 est emboîtée élastiquement et retenue dans la deuxième pince élastique 68. Le pan 36 est alors sensiblement horizontal et parallèle au panneau étroit 24 et son bord d'extrémité libre et d'orientation longitudinale 80 recouvre la partie en vis-à-vis du joint de porte 32 qui a été préalablement monté sur l'encadrement de porte en protégeant ainsi le joint 32 et en évitant de plus tout risque de démontage accidentel du joint.

L'agencement selon l'invention procure ainsi un avantage supplémentaire par rapport à l'état de la technique dans lequel un élément d'habillage 10 monobloc et rigide ne permet pas son montage en vue de recouvrir le joint 32 celui-ci étant alors mis en place après le montage de l'élément d'habillage 10.

La charnière 38 est par exemple une portion amincie qui permet facilement le "pliage" du pan horizontal 36 ou une partie plus épaisse d'articulation qui est fléchie élastiquement lors du basculement du pan 36 par rapport au pan 34.

L'invention n'est pas limitée au mode de réalisation qui vient être décrit.

L'élément d'habillage à deux pans articulés peu notamment être utilisé pour recouvrir d'autres pièces en tôle de la caisse véhicule ou d'un ouvrant articulé.

De même, les deux pinces élastiques peuvent appartenir à des agrafes indépendantes associées par paires qui sont fixées chacune respectivement sur le panneau vertical 22 et sur le panneau horizontal étroit 24.

De même, il est possible d'agencer, par inversion mécanique, les pinces élastiques sur les faces internes des pans articulés de l'élément d'habillage et les nervures complémentaires sur la pièce en tôle 12.

## Revendications

1. Agencement pour l'habillage d'une pièce (12, 18, 20) en tôle d'un véhicule automobile du type comportant un élément d'habillage (10), réalisé par moulage, allongé en forme générale de plaque à deux pans (34, 36) qui, en position montée de l'élément d'habillage (10) sur la pièce en tôle (12), s'étendent dans des plans sensiblement perpendiculaires, respectivement horizontal (36) et vertical (34), parallèlement à des parties en regard (22, 24) de la pièce en tôle, et du type comportant des moyens (42, 44, 50, 66, 68) de fixation de l'élément d'habillage (10) sur la pièce en tôle qui sont fixés sur cette dernière et dans lesquels l'élément d'habillage (10) est emboîté selon une direction transversale globalement perpendiculaire à la direction longitudinale générale de l'élément d'habillage, ces moyens de fixation comportant des premiers moyens (42, 66) de fixation du pan vertical (34) **caractérisé en ce que** les deux pans (34, 36) de l'élément d'habillage sont reliés entre eux par une charnière longitudinale (38), et **en ce que** les moyens de fixation comportent des deuxièmes moyens (44, 68) de fixation du pan horizontal (36).

2. Agencement selon la revendication précédente, **caractérisé en ce que** la charnière (38) est une portion de l'élément d'habillage (10) réalisée venue de matière par moulage avec les deux pans horizontal (36) et vertical (34).

3. Agencement selon l'une quelconque des revendications précédentes, **caractérisé en ce que** lesdits moyens de fixation comportent au moins une agrafe (50) fixée sur la pièce en tôle (12) et comportant au moins une pince élastique (66, 68) comportant des moyens anti-retour pour serrer et retenir une nervure longitudinale (42, 44) formée sur la face interne (35, 37) de l'un des pans (34, 36) de l'élément d'habillage (10).

4. Agencement selon la revendication précédente, **caractérisé en ce que** lesdits moyens de fixation comportent au moins deux agrafes associées par paires fixées sur la pièce en tôle (12) qui sont décalées latéralement l'une par rapport à l'autre et comportant chacune au moins une pince élastique (66, 68) comportant des moyens anti-retour pour serrer et retenir une nervure longitudinale (42, 44) formée sur la face interne (35, 37) de l'un en vis-à-vis des pans (34, 36) de l'élément d'habillage (10).

5. Agencement selon la revendication précédente, **caractérisé en ce que** les deux agrafes associées par paires sont réalisées en une seule pièce (50).

6. Agencement selon l'une des revendications 4 ou 5, **caractérisé en ce que** les deux pinces élastiques (66, 68) s'étendent dans des plans sensiblement perpendiculaires.

7. Agencement selon l'une quelconque des revendications 3 à 6, **caractérisé en ce que** la nervure (42, 44) s'étend depuis la face interne (35, 37) d'un pan (32, 34) de l'élément d'habillage (10) et dans un plan transversal sensiblement perpendiculaire au pan (32, 34).

8. Agencement selon l'une quelconque des revendications précédentes, **caractérisé en ce que** la pièce en tôle comporte au moins une bande de tôle (26, 30) dont un bord longitudinal libre est équipé d'un joint (32), et **en ce que**, en position montée de l'élément d'habillage (10), une portion longitudinale (80) d'un pan (36) de l'élément d'habillage (10° recouvre le joint (32) au droit dudit bord.

## Claims

1. An arrangement for the covering of a sheet metal component (12, 18, 20) of an automobile vehicle of the type comprising a covering member (10), formed by moulding, elongated into the general shape of a plate with two panels (34, 36) which, when the covering member (10) is mounted on the sheet metal component (12), extend in substantially perpendicular, respectively horizontal (36) and vertical (34), planes, parallel to facing portions (22, 24) of the sheet metal component, and of the type comprising means (42, 44, 50, 66, 68) for fastening the covering member (10) on the sheet metal component which are secured on the latter and in which the covering member (10) is fitted in a transverse direction globally perpendicular to the general longitudinal direction of the covering member, these fastening means comprising first means (42, 66) for fastening the vertical panel (34), **characterised in that** the two panels (34, 36) of the covering member are connected together by a longitudinal hinge (38) and **in that** the fastening means comprise second means (44, 68) for fastening the horizontal panel (36).

2. An arrangement as claimed in the preceding claim, **characterised in that** the hinge (38) is a portion of the covering member (10) produced integrally by moulding with the two horizontal and vertical panels (36, 34).

3. An arrangement as claimed in any one of the preceding claims, **characterised in that** the fastening means comprise at least one clip (50) secured to the sheet metal component (12) and comprising at least one elastic gripper (66, 68) comprising non-return means in order to clamp and retain a longitudinal rib (42, 44) formed on the inner surface (35, 37) of one of the panels (34, 36) of the covering member (10).

4. An arrangement as claimed in the preceding claim, **characterised in that** the fastening means comprise at least two clips associated in pairs and secured on the sheet metal component (12) which are offset laterally with respect to one another and each comprise at least one elastic gripper (66, 68) comprising non-return means in order to clamp and retain a longitudinal rib (42, 44) formed on the inner surface (35, 37) of a facing panel (34, 36) of the covering member (10).

5. An arrangement as claimed in the preceding claim, **characterised in that** the two clips associated in pairs are made in one piece (50).

6. An arrangement as claimed in one of claims 4 or 5, **characterised in that** the two elastic grippers (66, 68) extend in substantially perpendicular planes.

7. An arrangement as claimed in any one of claims 3 to 6, **characterised in that** the rib (42, 44) extends from the inner surface (35, 37) of a panel (32, 34) of the covering member (10) and in a transverse plane substantially perpendicular to the panel (32, 34).

8. An arrangement as claimed in any one of the preceding claims, **characterised in that** the sheet metal component comprises at least one sheet metal strip (26, 30), a longitudinal free edge of which is fitted with a gasket (32), and **in that**, in the assembled position of the covering member (10), a longitudinal portion (80) of a panel (36) of the covering member (10) covers the gasket (32) at right angles to this edge.

## Patentansprüche

1. Ausgestaltung einer Verkleidung für ein Blechteil (12,18,20) eines Kraftfahrzeuges, die ein durch ein Gießverfahren hergestelltes, langgestrecktes, im wesentlichen plattenförmiges Verkleidungsteil (10) mit zwei Flachteilen (34,36) aufweist, die sich in der am Blechteil (12) angebauten Stellung des Verkleidungsteils (10) in im wesentlichen senkrecht zueinander angeordneten Ebenen erstrecken, bzw. waagrecht (36) und senkrecht (38), und parallel zu gegenüber liegenden Abschnitten (22,24) des Blechteils sind, sowie eine Vorrichtung (42,44,50,66,68) zur Befestigung des Verkleidungsteils (10) am Blechteil aufweist, die an letzterer befestigt ist und in die das Verkleidungsteil (10) entlang einer Querrichtung eingesetzt wird, die im. wesentlichen senkrecht zur allgemeinen Längsrichtung des Verkleidungsteils ist, wobei die Befestigungsvorrichtung eine erste Anordnung (42,66) zur Befestigung des senkrechten Flachteils (34) aufweist, **dadurch gekennzeichnet, dass** die beiden Flachteile (34,36) des Verkleidungsteils miteinander über ein langgestrecktes Scharnier (38) verbunden sind und dass die Befestigungsvorrichtung eine zweite Anordnung (44,68) zur Befestigung des waagrechten Flachteils (36) aufweist.

2. Ausgestaltung nach dem vorhergehenden Anspruch, **dadurch gekennzeichnet, dass** das Scharnier (38) ein Teil des Verkleidungsteils (10) ist, das einstückig zusammen mit dem waagrechten Flachteil (36) und dem senkrechten Flachteil (34) durch ein Gießverfahren hergestellt wird.

3. Ausgestaltung nach einem der vorhergehenden Ansprüche, **dadurch gekennzeichnet, dass** die Befestigungsvorrichtung wenigstens eine am Blechteil (12) befestigte Klemme (50) aufweist und wenigstens ein elastisches Klemmteil (66,68) aufweist, das mit einer Rückhalteanordnung zum Feststellen und zur Halterung einer Längsrippe (42,44) versehen ist, die auf der Innenseite (35,37) eines jeden der beiden Flachteile (34,36) des Verkleidungsteils (10) ausgebildet ist.

4. Ausgestaltung nach dem vorhergehenden Anspruch, **dadurch gekennzeichnet, dass** die Befestigungsvorrichtung wenigstens zwei paarweise zueinander angeordnete Klemmen aufweist, die am Blechteil (12) befestigt und seitlich relativ zueinander verschoben sind, wobei jede wenigstens ein elastisches Klemmteil (66,68) aufweist, das mit einer Rückhalteanordnung zur Feststellung und zur Halterung einer.Längsrippe (42,44) versehen ist, die auf der gegenüber liegenden Innenseite eines jeden der beiden Flachteile (34,36) des Verkleidungsteils (10) ausgebildet ist.

5. Ausgestaltung nach dem vorhergehenden Anspruch, **dadurch gekennzeichnet, dass** die beiden paarweise zueinander angeordneten Klemmen (50) einteilig ausgebildet sind.

6. Ausgestaltung nach einem der Ansprüche 4 oder 5, **dadurch gekennzeichnet, dass** die beiden elastischen Klemmteile (66,68) sich in im wesentlichen senkrechten Ebenen erstrecken.

7. Ausgestaltung nach einem der Ansprüche 3 bis 6, **dadurch gekennzeichnet, dass** sich die Rippe (42,44) von der Innenseite (35,37) eines Flachteils (34,36) des Verkleidungsteils (10) aus erstreckt in einer Querebene, die wesentlichen senkrecht zum Flachteil (34,36) verläuft.

8. Ausgestaltung nach einem der vorhergehenden Ansprüche, **dadurch gekennzeichnet, dass** das Blechteil wenigstens ein Blechband (26,30) aufweist, dessen freier Längsrand mit einer Dichtung (32) versehen ist und dass in der angebauten Stellung des Verkleidungsteils (10) ein Längsabschnitt (80) eines Flachteils (36) des Verkleidungsteils (10) die gegenüber liegende Dichtung (32) bedeckt.
